# EUROPEAN PATENT SPECIFICATION

(11) **EP 0 340 482 B1**
(45) Date of publication and mention of the grant of the patent: **22.09.1993**
(21) Application number: 89106297.8
(22) Date of filing: 10.04.1989
(51) Int. Cl.: D06F 43/08

(54) **Apparatus for extracting solvent from mixtures with oils, greases and impurities for dry-cleaning machines**
Vorrichtung zum Extrahieren des Lösungsmittels aus Mischungen mit Ölen, Fetten und Schmutz für Trockenreinigungsmaschinen
Appareil pour extraire du solvant de mélanges avec des huiles, graisses et impuretés pour machines de nettoyage à sec

(30) Priority: 04.05.1988 IT 344188
(43) Date of publication of application: 08.11.1989
(73) Proprietor: SO DI BO S.p.A., I-40128 Bologna (IT)
(72) Inventor: Arbizzani, Tommaso, I-40044 Pontecchio Marconi (Bologna) (IT)
(74) Representative: Modiano, Guido, Dr.-Ing.

(56) References cited:
- US-A- 3 177 126

## Description

The present invention relates to an apparatus for extracting solvent from mixtures with oils, greases and impurities for dry-cleaning machines.

It is known that fabrics are generally washed in dry-cleaning machines, generally at the end of industrial processes, to remove oily or greasy substances which are used in large amounts during said processes; these oily substances and impurities remain mixed with the solvents, perchloroethylene or trichloroethylene, which are difficult to eliminate.

After the conventional solvent distillation treatment, in fact, solvents remain in the oily substances in percentages of the order of even 20%, and the temperature of the mixture would have to be increased in order to eliminate them: on the other hand, however, said temperature cannot be increased above 155° C for perchloroethylene and above 120° C for trichloroethylene to prevent solvent degradation, which releases harmful substances such as for example chlorine: however, with such percentages of solvent content the oils must be included among toxic and harmful process wastes and cannot be disposed of with conventional methods, nor can they be regenerated to re-enter the production process.

Known from US-A-3,177,126 is an apparatus for extracting solvent as defined in the precharacterizing part of claim 1.

The technical aim of the present invention is to obviate the above described disadvantages by providing an apparatus for extracting solvent from mixtures with oils, greases and impurities for dry-cleaning machines which operates at low temperature to avoid solvent degeneration.

Within the scope of this technical aim, an object of the present invention is to provide an apparatus which reduces the presence of solvents to less than 1% so that the oils can be comprised within the limits of the currently applicable storage and disposal laws.

Within this technical aim, another object of the present invention is to achieve the above described aims with a simple apparatus which is relatively easy to provide in practice, is safe in use and effective in operation as well as relatively modest in cost.

This aim and these objects are achieved by the present apparatus for extracting solvent from mixtures with oils, greases and impurities for dry cleaning machines, as defined in the appended claims.

The characteristics and advantages will become apparent from the detailed description of a preferred but not exclusive embodiment of an apparatus according to the invention, illustrated only by way of non-limitative example in the accompanying drawings, wherein:
figure 1 is a schematic front view of an apparatus for extracting solvent from mixtures according to the invention;
figure 2 is a schematic lateral view of said apparatus.

With particular reference to the above described figures, the apparatus according to the invention for extracting solvent from mixtures with oils, greases and impurities for dry-cleaning machines is indicated as a whole by the reference numeral 1.

The apparatus 1 comprises a sealingly closed tank 2 inside which a substantially horizontal shaft 3 is rotatably mounted; a plurality of disks 4 is keyed on said shaft, which is continuously actuated by a motor-reducer assembly 5, and the tank is filled with the oils to be purified up to the level indicated by the letter L.

The upper part of the tank 2 is connected by means of a pipe 6, cutoff by a valve 6a, to a duct 7 leading to a solvent tank 9 for the recovered solvent through another pipe 8 and a valve 8a; the solvent tank 9, having an inclined bottom 10, is accessible through a port 11 and is connected, through a duct 12 cutoff by a valve 12a, to a pump 13 connected to duct 7; the duct 12 is then connected by means of a T-shaped pipe joint to a pipe 14 which is cutoff by a valve 14a and leads to a discharge pipe 15 having an access cover 16 connected to the base of the tank 2 by means of an L-shaped portion; the pipe 12 is connected by means of a further T-shaped pipe joint to a pipe 17 cutoff by a valve 17a, and the connecting node of ducts 6 and 7 extends above 7 with a stub pipe 18 cutoff by a valve 18a.

The upper portion of the tank 2 has an air-solvent outlet 19 and an air inlet 20, both provided with fixed diaphragms 21 which improve heat exchange; the openings 19 and 20 are mutually connected by a condenser assembly 22 comprising a solvent collecting tray 23, a heat exchanger 24 for cooling the mixture, a motor-reducer assembly 25 actuating a fan 26 adapted to cause the extracted particles to advance so as to have a continuous flow of oil-air-evaporated solvent mixture from the tank 2 to the condenser assembly 22, according to arrows A and of oils from the assembly 22 to the tank 2, according to arrows C.

The tray 23 is connected to a water-solvent separator 28 by means of a pipe 27; said separator leads to the solvent tank 9 through a tube 29.

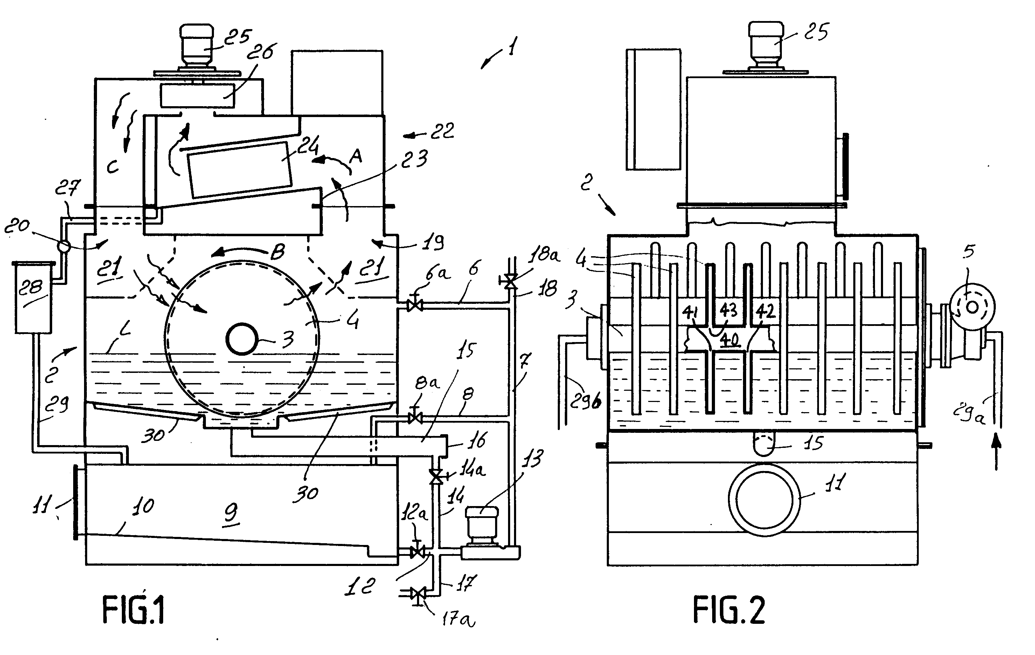

In order to increase the efficiency of the apparatus, the shaft 3 is axially perforated, and the disks 4 are internally hollow and connected to the axial perforation 40 of shaft 3 via radial holes 41, 42, 43, as clearly shown in the cross-section view of figure 2; further the shaft 3 can be connected to a line 29a, 29b for feeding and removing superheated pressurized steam adapted to heat the disks from the inside; for the same purpose the bottom of the tank 2 may have an interspace 30 in which superheated pressurized steam flows.

The operation of the device according to the invention is the following:
the oils-solvent mixture is fed from an external container to pipe 18 or pipe 17 through valve 18a or, respectively, valve 17a and then is sent into tank 2 (by means of the pump 13 if it arrives from 17) through valve 6a; the shaft 3 rotates together with its associated disks 4 (arrow B) and the disks, by immersing below and re-emerging from the free surface L of the oils drag out a thin film of oil; the airflow arriving from 20 strikes the emerging semi-portion of the disks and removes the solvent from its surface; the air mixed with solvent reaches the heat exchanger 24 through diaphragm 21 and is cooled thereby, condensing the solvent drops, which fall into the tray 23 from which they are then removed through separator 28, and pipes 27, 29 to the solvent tank 9, while any oil dragged with the air may fall back into the tank 2.

In order to evaporate the solvent from the oils or greasy substances faster and in larger amounts, the air or the disks 4 and the tank can be heated by means of the superheated steam which can flow through the shaft 3 or through the interspace 30.

At the end of the separation, the treated oil may be discharged to an external container through ducts 14, 7 and 18 and pump 13, while the recovered solvent may be fed to another external container through ducts 12, 7 and 18 and pump 13. After discharge of the oil, in order to prevent the oil from solidifying and clogging the pump during cooling, pump and ducts are washed by recycling the solvent from solvent tank 9, through pipe 12, pump 13, pipe 8, again into tank 9, by opening valves 12a and 8a.

The apparatus according to the invention allows to reduce the amount of solvent present in the greasy substances to levels of less than 1% in a rapid and inexpensive manner without having to increase the temperature of the oils.

It has thus been observed that the invention achieves the intended aim and objects.

The invention thus conceived is susceptible to numerous modifications and variations, all of which are within the scope of the inventive concept. Furthermore all the details may be replaced with other technically equivalent elements.

In practice, the materials employed, as well as the shapes and dimensions, may be any according to the requirements without thereby abandoning the scope of the protection of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for extracting solvent from mixtures with oils, greases and impurities for dry-cleaning machines, comprising a tank (2) for containing the mixture, a pack of disks (4) mounted in said tank and rotatably actuated according to a substantially horizontal axis (3), said disks being rotatable for immersing in and for re-emerging from the mixture, the upper part of said tank having an air-solvent outlet (19) and an air inlet (20) mutually joined by a solvent condensing assembly (22) comprising a heat exchanger (24) overlying a tray (23) for collecting the condensed solvent and a fan (26) to generate an airflow through the assembly, said airflow being adapted to evaporate the solvent from the re-emerging portions of the disks, said disks (4) having heating means to increase the evaporation of the solvent, characterized in that said heating means comprise cavities formed in the thickness of the disks (4) and connected to an axial duct (3, 40) for feeding pressurized superheated steam.

2. Apparatus according to claim 1, characterized in that said cavitites formed in the thickness of said disks (4) are connected to said axial duct (3, 40) via radial holes (41, 42, 43).

3. Apparatus according to claim 1, characterized in that said solvent condensing assembly, before the air outlet (19) leading towards the tank (2), has a heater adapted to heat said airflow before it is fed into the tank (2).

4. Apparatus according to claim 1, characterized in that said fan (26) is located above said disks (4) whereby to generate an airflow which flows across said disks (4) before entering said tank (2).

## Patentansprüche

1. Vorrichtung zum Extrahieren von Lösungsmittel aus Mischungen mit Ölen, Fetten und Verunreinigungen, für Trockenreinigungsmaschinen, mit einem Behälter (2) zur Aufnahme der Mischung, einem Stapel von Scheiben (4), die in den Behälter angebracht sind und um eine im wesentlichen horizontale Achse (3) gedreht werden können, wobei die Scheiben so drehbar sind, daß sie in die Mischung eintauchen und wieder aus dieser herauskommen, der obere Teil des Behälters einen Luft/Lösungsmittelauslaß (19) und einen Lufteinlaß (20) aufweist, die gemeinsam durch eine Lösungsmittel verflüssigende Anordnung (22) verbunden sind, die einen Wärmetauscher (24) aufweist, der oberhalb eines Tabletts (23) zum Sammeln des kondensierten Lösungsmittels angeordnet ist, sowie einem Gebläse (26) zur Erzeugung eines Luftflusses durch die Anordnung, wobei der Luftfluß so ausgebildet ist, daß er das Lösungsmittel von den wieder auftauchenden Abschnitten der Scheiben verdampft, und die Scheiben (4) eine Heizeinrichtung zur Erhöhung der Verdampfung des Lösungsmittels aufweisen,
dadurch **gekennzeichnet,** daß die Heizeinrichtung Hohlräume aufweist, die in der Dicke der Scheiben (4) ausgebildet und an eine axiale Leitung (3, 40) zur Zuführung unter Druck stehenden, überhitzten Dampfes angeschlossen sind.

2. Vorrichtung nach Anspruch 1,
dadurch **gekennzeichnet,** daß die in der Dicke der Scheiben (4) ausgebildeten Hohlräume an die axiale Leitung (3, 40) über Radiallöcher (41, 42, 43) angeschlossen sind.

3. Vorrichtung nach Anspruch 1,
dadurch **gekennzeichnet,** daß die Lösungsmittel verflüssigende Anordnung vor dem zum Behälter (2) führenden Luftauslaß (19) eine Heizvorrichtung aufweist, die zur Erhitzung des Luftflusses, bevor dieser dem Behälter (2) zugeführt wird, ausgebildet ist.

4. Vorrichtung nach Anspruch 1,
dadurch **gekennzeichnet,** daß das Gebläse (26) oberhalb der Scheiben (4) angeordnet ist, um so einen Luftfluß zu erzeugen, welcher über die Scheiben (4) fließt, bevor er in den Behälter (2) hineingelangt.

## Revendications

1. Appareil permettant, dans des machines de nettoyage à sec, d'extraire le solvant de mélanges avec des huiles, grasses et impuretés, comprenant une cuve (2), destinée à contenir le mélange, et un empilement de disques (4) montés dans la cuve et actionnés en rotation suivant un axe pratiquement horizontal (3), ces disques étant agencés de façon à pouvoir être entraînés en rotation de façon à s'immerger dans le mélange et à re-émerger de ce dernier, la partie supérieure de la cuve comportant une sortie air-solvant (19) et une entrée d'air (20) réunies entre elles par un ensemble de condensation de solvant (22) comprenant un échangeur de chaleur (24), disposé au-dessus d'un plateau (23) servant à recueillir le solvant condensé, et un ventilateur (26) servant à produire un flux d'air à travers l'ensemble, ce flux d'air étant destiné à évaporer le solvant à partir des parties re-émergées des disques, ces disques (4) comportant des moyens de chauffage permettant d'augmenter l'évaporation du solvant, caractérisé en ce que lesdits moyens de chauffage comprennent des cavités ménagées dans l'épaisseur des disques (4) et reliées à un conduit axial (3, 40) servant à introduire de la vapeur d'eau sous pression et surchauffée.

2. Appareil suivant la revendication 1, caractérisé en ce que les cavités formées dans l'épaisseur des disques (4) sont reliées au conduit axial (3, 40) par des trous radiaux (41, 42, 43).

3. Appareil suivant la revendication 1, caractérisé en ce que l'ensemble de condensation de solvant comporte, en amont de la sortie d'air (19) menant à la cuve (2), un dispositif de chauffage agencé de façon à chauffer le flux d'air avant qu'il soit introduit dans la cuve (2).

4. Appareil suivant la revendication 1, caractérisé en ce que le ventilateur (26) est situé au-dessus des disques (4), de façon à produire un flux d'air qui passe d'un côté à l'autre des disques (4) avant de pénétrer dans la cuve (2).
